(19) Europäisches Patentamt
European Patent Office
Office européen des brevets

(11) **EP 4 047 386 B1**

(12) **EUROPEAN PATENT SPECIFICATION**

(45) Date of publication and mention
of the grant of the patent:
**30.08.2023 Bulletin 2023/35**

(21) Application number: **21200042.6**

(22) Date of filing: **30.09.2021**

(51) International Patent Classification (IPC):
**G01S 7/481** (2006.01)　　　**G02B 27/48** (2006.01)

(52) Cooperative Patent Classification (CPC):
**G01S 17/46; G01S 7/4814; G01S 7/4816;
G01S 17/894; G02B 27/0025**

(54) **DEPTH DETECTION APPARATUS AND ELECTRONIC DEVICE**

TIEFENERKENNUNGSGERÄT UND ELEKTRONISCHE VORRICHTUNG

APPAREIL DE DÉTECTION DE PROFONDEUR ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2021 CN 202110197871**

(43) Date of publication of application:
**24.08.2022 Bulletin 2022/34**

(73) Proprietor: **HUI DING INTERNATIONAL PTE. LTD.
The Aries 117586 (SG)**

(72) Inventors:
• **TSAI, Fei Hsin
Taipei City 100 (TW)**
• **CHANG, Shao Yu
Taipei City 100 (TW)**
• **GE, Cong
Taipei City 100 (TW)**

(74) Representative: **Pfenning, Meinig & Partner mbB
Patent- und Rechtsanwälte
Theresienhöhe 11a
80339 München (DE)**

(56) References cited:
**CN-A- 109 143 525      CN-A- 110 596 720
US-A1- 2010 296 061**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present application relates to the field of depth detection technologies, and in particular, to a depth detection apparatus and an electronic device.

## BACKGROUND

With the rise of "facial recognition", "motion sensing game" and "pattern recognition", three-dimensional depth detection has become a hot topic in the current development. In time-of-flight (TOF) depth detection, a distance to an object is calculated by measuring the time of flight of signal light in space. Because of the advantages such as high accuracy and a wide measurement range, the TOF depth detection is widely used in fields such as consumer electronics, unmanned driving, and augmented reality or virtual reality (AR/VR).

Depending on whether the signal light is continuous on a detection object, the time-of-flight depth detection can be classified into a flood time-of-flight (Flood TOF) depth detection and a spot time-of-flight (Spot TOF) depth detection. The spot time-of-flight depth detection has the advantages of a wide range, high precision, and low power consumption. However, due to the impact of distortion, some light spots cannot reach a photosensitive chip, resulting in power loss and affecting the efficiency of depth detection.

CN110596720A provides a distance measurement system. The system comprises an emitting module for emitting a spot pattern beam with first distortion characteristics; a collection module including an imaging lens with second distortion characteristics and an array pixel unit, wherein the collection module is used for collecting the reflected spot pattern beam; and a processing circuit connected with the emitting module and the collection module and used for computing the flight time between the emitted beam and the reflected beam; the first distortion characteristics and the second distortion characteristics are mutually compensated. The distance measurement system provided by the invention can realize distortion compensation on the hardware, compared with the traditional scheme of realizing distortion compensation through the algorithm, the requirements on the algorithm are reduced, and the distortion problem can be solved from the source, and the effect is better.

## SUMMARY

Embodiments of the present application provide a depth detection apparatus and an electronic device, which can alleviate the distortion problem and improve the efficiency of depth detection. The invention is set out in the appended set of claims.

According to a first aspect, a depth detection apparatus is provided, including:

an emitting assembly for emitting a speckle light signal to a detection object, where the emitting assembly is configured to cause the speckle light signal to generate positive distortion;
an imaging lens for imaging, to a photoelectric sensor, a depth light signal returned after the speckle light signal strikes the detection object, where the imaging lens is configured to cause the imaging of the depth light signal to generate negative distortion; and
a photoelectric sensor for converting the depth light signal into an electrical signal,
wherein a difference between an absolute value of a distortion amount of the negative distortion and an absolute value of a distortion amount of the positive distortion does not exceed 0.05, and the negative distortion and the positive distortion each are distortion having a distortion amount whose absolute value is greater than or equal to 0.03.

Because of physical nonlinear characteristics of the emitting assembly and inevitable impact of assembly tolerances in actual production, the speckle light signal that strikes the detection object inevitably causes positive distortion. The imaging lens that generates negative distortion is configured, such that the positive distortion and the negative distortion are complementary, and the depth light signal finally imaged to the photoelectric sensor is a depth light signal after distortion correction, which can effectively alleviate the distortion problem, increase the utilization of speckles, and enhance relative illuminance of a lens, so as to reduce system power consumption, increase depth resolution, and improve global consistency of depth errors, thereby improving the efficiency of depth detection and imaging quality of the depth detection apparatus.

In a possible implementation, the emitting assembly includes a plurality of lenses, and the plurality of lenses are configured to cause the speckle light signal to generate the positive distortion.

In a possible implementation, the emitting assembly includes a plurality of lenses and one light signal duplication element, and the plurality of lenses and the light signal duplication element are configured to cause the speckle light signal to generate the positive distortion.

In one embodiment, the imaging lens includes a lens group composed of a plurality of lenses arranged in sequence along an optical axis.

When a difference between absolute values of distortion amounts of the positive distortion and the negative distortion that are generated by at least one lens and/or at least one light signal duplication element in the imaging lens and at least one lens in the emitting assembly does not exceed 0.05, it may be considered that the positive distortion and the negative distortion are complementary. The complementary effect can further eliminate the positive distortion generated by the emitting assembly, further increase the utilization of edge speckles, and reduce system power consumption, thereby enhancing relative illuminance of the imaging lens, improving depth resolution, and greatly improving imaging quality of the depth detection apparatus. In addition, because the distortion complementation eliminates the positive distortion generated by the emitting assembly, steps and components of subsequent image processing in a general depth detection apparatus can be omitted, which reduces costs of the depth detection apparatus, and improves the efficiency of depth detection.

A distortion curve of the negative distortion satisfies a formula:

$$y = A1 * x + A2 * x^2 + A3 * x^3 + A4 * x^4 + A5 * x^5$$

wherein y denotes a distortion amount, x denotes a normalized value of a field of view angle, and A1 to A5 are parameter coefficients, wherein $0.123 \leq A1 \leq 0.147$, $-0.702 \leq A2 \leq -0.686$, $1.708 \leq A3 \leq 1.718$, $-1.967 \leq A4 \leq -1.961$, and $0.679 \leq A5 \leq 0.683$.

In a possible implementation, a distortion curve of the negative distortion satisfies that the distortion amount is -0.2 when the field of view is 40 degrees; the distortion amount is -0.1 when the field of view is 30 degrees; and the distortion amount is 0 when the field of view is 0 degrees.

In a possible implementation, the emitting assembly includes:

a light source for emitting a plurality of light signals; and
an emitting lens for converting the light signals into parallel light signals.

In a possible implementation, the emitting assembly further includes a light signal duplication element, and the light signal duplication element is configured to duplicate the parallel light signals to obtain the speckle light signal.

The configuration of the light signal duplication element facilitates spatial modulation of the speckle light signal emitted by the emitting assembly, so as to form structured light in a plurality of modes, thereby expanding a measurement range of the depth detection apparatus, and improving the measurement accuracy of depth detection.

In a possible implementation, the light source is a vertical-cavity surface-emitting laser. The vertical-cavity surface-emitting laser has the advantages of a small volume, high power, a small beam divergence angle, and stable operation. The configuration of the vertical-cavity surface-emitting laser helps improve light spot quality of the depth detection apparatus.

In a possible implementation, the emitting assembly further includes an emitting lens for converting the light signals into parallel light signals.

In a possible implementation, the emitting lens is a collimator, and the collimator includes a plurality of lenses arranged in sequence along a direction of an optical axis.

In a possible implementation, the imaging lens is made of plastic material.

According to a second aspect, an electronic device is provided, including the depth detection apparatus according to the first aspect or any possible implementation of the first aspect.

## BRIEF DESCRIPTION OF THE DRAWINGS

FIG. 1 is a diagram explaining classification of distortion;
FIG. 2 is a schematic structural diagram of a depth detection apparatus according to an embodiment of the present application;
FIG. 3 is a schematic diagram of several distortion curves according to an embodiment of the present application;
FIG. 4 is a schematic diagram of a distortion curve of a lens of an emitting assembly according to an embodiment of the present application;
FIG. 5 is a diagram of a speckle imaging effect corresponding to a lens of an emitting assembly according to an embodiment of the present application;

FIG. 6 is a schematic diagram of a distortion curve of an imaging lens according to an embodiment of the present application;

FIG. 7 is a diagram of an imaging effect of ideal speckles by an imaging lens according to an embodiment of the present application;

FIG. 8 is a schematic diagram of complementation of distortion curves of a depth detection apparatus according to an embodiment of the present application; and

FIG. 9 is a diagram of a speckle correction effect of a depth detection apparatus according to an embodiment of the present application.

## DESCRIPTION OF EMBODIMENTSHUS

To make the technical problems to be solved the embodiments of the present application, the technical solutions, and the beneficial effects of the embodiments of the present application clearer, the following clearly and completely describes the technical solutions of the present application with reference to the accompanying drawings.

First, terms used in the embodiments of the present application are briefly described.

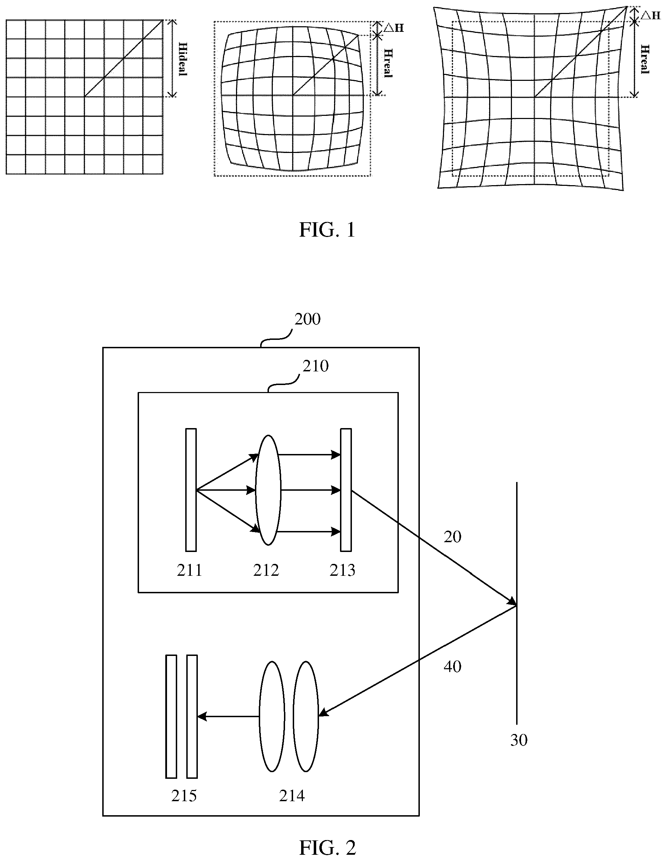

Distortion is a type of optical aberration. Due to physical nonlinear characteristics of a camera lens, a corresponding shape of a physical object will be inevitably distorted on an image in an imaging process. Distortion is present in all optical camera lenses. Distortion is geometric distortion of an image. The intensity of distortion increases from the image center to the image edges, and distortion has a relatively apparent effect mainly at the image edges. The existence of distortion not only affects the visual effect of collected images, but also reduces the precision of camera measurement and adversely affects the results when they are directly applied to industrial close-range measurement. There are also various errors in the process of element processing and lens assembly for a camera, which will also aggravate the distortion effect of images. According to the direction of distortion, the distortion can be classified as positive distortion and negative distortion; and according to the shape of image distortion, the distortion can be classified as barrel distortion and pincushion distortion, where the barrel distortion may also be referred to as negative distortion, and the pincushion distortion may also be referred to as positive distortion. The distortion states of an object image is shown in FIG. 1. Distortion can be used to reflect the intensity of image distortion, which, specifically, reflects a ratio of an image height deviation value to an ideal image height, where the image height deviation value is a difference between a real image height and an ideal image height. A calculation process of a distortion amount is shown by the formula as follows:

$$\text{Dis} = \frac{(H_{real} - H_{ideal})}{H_{ideal}} * 100\%$$

where Dis denotes a distortion amount, H*real* denotes a real image height, H*ideal* denotes an ideal image height, and $\Delta H$ denotes an image height deviation value. Therefore, the above formula may also be expressed as:

$$\text{Dis} = \frac{\Delta H}{H_{ideal}} * 100\%$$

A field of view (FOV) is a physical quantity used to represent the field of view of a lens. In the case of the same lens dimensions, the wider the field of view of the lens, the wider the area information the lens can obtain. Meanwhile, a wider field of view will cause greater lens distortion. For example, a fisheye lens has a very wide field of view, but image distortion is also very severe.

Illuminance refers to an amount of energy of visible light received per unit area, which may be understood as the brightness of an object or a surface thereof illuminated by a light source. Relative illuminance (RI) is a ratio of center illuminance to peripheral illuminance. Excessively low relative illuminance will lead to color distortion and a vignetting phenomenon where the image has a brighter center and darker corners around, which will directly affect the measurement accuracy of depth detection.

For distortion generated by a lens, currently, a calibration correction method for a distorted image is commonly used in the industry, in which digital processing is performed on an image collected by the lens, to calibrate distortion generated by the image and thereby correct the distorted image. Such a method can be used during post image processing to correct the distortion generated by the lens. However, for application scenarios where an image captured by the lens is required to be used directly, it is obvious that the post image processing cannot improve the distortion generated by the lens. Alternatively, during the design of a lens in the prior art, a distortion curve of the lens is designed to reduce a distortion amount of an image as much as possible, but the effect of correcting the distortion is limited.

Depending on different measurement principles, three-dimensional depth detection is generally classified as: time of flight (TOF), structured light (SL), and binocular stereo vision. The time-of-flight method uses active light detection to obtain a distance to a target object by detecting the time of flight (round-trip) of an emitted light signal. A time-of-flight camera usually includes units such as a light source, an optical component, a sensor, a control circuit, and a processing circuit. Depending on whether the signal light is continuous on an object plane, the time-of-flight method can be classified as flood time-of-flight (Flood TOF) depth detection and spot time-of-flight (Spot TOF) depth detection. A signal light projected by a light source in the flood TOF through an optical element to a surface of a detection object is a relatively uniform flood light, while a signal light projected by a light source in the spot TOF through an optical element to a surface of a detection object is a speckle light, namely, an array of light spots, which may also be referred to as a spot light.

The technical solutions of the embodiments of the present application are applied to the spot time-of-flight (Spot TOF) depth detection. In the spot TOF, the light emitted by the light source passes through the optical element and finally forms a speckle light. However, because of physical nonlinear characteristics of the optical element and inevitable impact of assembly tolerances in actual production, the optical element will cause the speckle light to generate positive distortion when converting the light. Positive distortion may cause speckles on the edges to fail to reach a photosensitive element for imaging, reducing speckle utilization and affecting the efficiency of depth detection.

In view of this, the embodiments of the present application provide a depth detection apparatus, which achieves lens distortion complementation by configuring an imaging lens that generates negative distortion, thereby alleviating the distortion problem and improving the efficiency of depth detection.

FIG. 2 is a schematic structural diagram of a depth detection apparatus 200 according to an embodiment of the present application.

In one embodiment, as shown in FIG. 2, the depth detection apparatus 200 may be applied to spot TOF depth detection, and the depth detection apparatus 200 includes an emitting assembly 210, an imaging lens 214, and a photoelectric sensor 215.

The emitting assembly 210 is configured to emit a speckle light signal 20 to a detection object 30. The emitting assembly 210 provides the speckle light signal 20 to the surface and surroundings of the detection object 30, and at least part of the speckle light signal 20 is reflected and/or scattered by the detection object 30 to form a depth light signal 40. A depth difference at different positions of the detection object 30 will cause the depth light signal 40 to generate an optical path difference, such that the depth light signal 40 carries depth information of the detection object 30.

The emitting assembly 210 is configured to cause the speckle light signal 20 to generate positive distortion. For example, the speckle light signal 20 may be a speckle light signal obtained by converting light signals emitted by a light source into parallel lights and then duplicating the parallel lights. In this case, an optical element that emits, converts, or duplicates the light signals may cause the speckle light signal 20 to generate positive distortion. For example, physical nonlinear characteristics of the optical element and inevitable impact of assembly tolerances in actual production cause the speckle light signal striking the detection object to inevitably generate positive distortion.

The imaging lens 214 is configured to image, to the photoelectric sensor 215, the depth light signal 40 returned after the speckle light signal 20 strikes the detection object 30. The depth light signal 40 is received by the imaging lens 214 and imaged to the photoelectric sensor 215. The photoelectric sensor 215 is configured to convert the depth light signal 40 into an electrical signal.

The imaging lens 214 is configured to cause the imaging of the depth light signal 40 to generate negative distortion. The positive distortion generated by the emitting assembly 210 is complementary to the negative distortion generated by the imaging lens 214. In other words, the negative distortion generated by the imaging lens 214 can offset or partially offset the positive distortion generated by the emitting assembly 210, so as to alleviate the distortion problem. The positive distortion and the negative distortion described in the embodiment of the present application each are distortion having a distortion amount whose absolute value is greater than or equal to 0.03.

Specifically, the negative distortion generated by the imaging lens 214 can allow edge speckles, which originally cannot reach the photoelectric sensor 215 due to the positive distortion, to reach the photoelectric sensor 215 due to the correction of the negative distortion, which improves utilization of the edge speckles, reduces the power consumption, and improves the depth resolution. In addition, the negative distortion allows the speckles to be closer to the center of the photoelectric sensor 215, which enhances the relative illuminance of the imaging lens 214, reduces an energy difference between the center speckles and the edge speckles, and improves the global consistency of depth errors.

Therefore, the depth detection apparatus according to this embodiment of the present application achieves the lens distortion complementation by configuring the imaging lens that generates negative distortion, which can reduce power consumption, improve the depth resolution, and improve the global consistency of the depth errors, thereby improving the efficiency of depth detection.

Optionally, in one embodiment, the emitting assembly 210 may include a light source 211, an emitting lens 212, and a light signal duplication element 213. The configuration of the emitting lens and the light signal duplication element makes it possible to collimate and duplicate light spots of the signal light emitted by the light source 211, thereby expanding the measurement range of the depth detection apparatus.

The light source 211 is configured to emit light signals. Optionally, in one embodiment, the light source 211 may be a light source such as a vertical-cavity surface-emitting laser (VCSEL), an edge-emitting laser (EEL), or a light-emitting diode (LED), or an array including a plurality of the foregoing light sources, and is configured to emit a signal light source. The signal light source may be an optically modulated, processed, or controlled light signal carrying a spatial optical pattern, or may be an optically modulated, processed, or controlled light signal with regional illumination, or may be an optically controlled, processed, or controlled optical signal with periodic illumination, or may be a combination of the foregoing light signals. The VCSEL is a semiconductor diode laser, which emits a laser beam that usually leaves the device from the top surface and in a basically vertical manner. The VCSEL light source has many advantages such as small volume, high power, small beam divergence angle, and stable operation, and therefore is the first choice for the light source of the depth detection system. In the embodiments of the present application, the VCSEL is taken as an example for description. Specifically, the light source may be a VCSEL chip with a single chip and a plurality of light-emitting points, and the plurality of light-emitting points are arranged in a two-dimensional matrix, and correspondingly emit a plurality of laser signals to form a matrix laser signal array. In a depth detection apparatus that uses the time-of-flight measurement, the light-emitting points may be preferably set as a regular two-dimensional matrix, while in a 3D detection apparatus that uses the structured light measurement (which may also be considered as a depth detection apparatus), the light-emitting points may be set to be randomly distributed.

The emitting lens 212 is configured to convert the light signals emitted by the light source 211 into parallel light signals. Optionally, in one embodiment, the emitting lens 212 (Collimator, TX LENs) may be a collimator or any optical element that can achieve the effect of beam collimation. The emitting lens 212 may be a glass or plastic lens. In this embodiment, a collimator is taken as an example. The configuration of the collimator makes it possible to change a diameter and a divergence angle of a beam in a dimming system, such that the beam becomes collimated parallel beams, and the beam energy is more concentrated, so as to obtain fine light spots with high power density. However, in an actual application process, due to factors such as an error of the collimator itself, and an assembly error between the collimator and a collimator carrier, distortion will inevitably occur, making it difficult to obtain an ideal light spot. The collimator may be a lens group composed of a plurality of lenses arranged in sequence along an optical axis. Compared with the laser signal array emitted by the light source, the speckle light signal projected after passing through the collimator and the light signal duplication element generates positive distortion.

The light signal duplication element 213 is configured to duplicate the parallel light signals to obtain the speckle light signal. Optionally, in one embodiment, the light signal duplication element 213 may be a combination of at least one or more optical elements such as a diffractive optical element (DOE), a micro lens array (MLA), a grating, or any other optical element that can form a spot. In this embodiment of the present application, the DOE is taken as an example for description. The DOE is usually made of glass or plastic, and is configured to duplicate, to a specific multiple, the beam emitted by the VCSEL light source, and then project same outward. The DOE may project sparse and dense speckle patterns into space, or form structured light patterns in a plurality of modes, so as to be applicable for various applications. A diffraction capability of the DOE determines the measurement range of the depth detection system. In this embodiment, the configuration of the light signal duplication element 213 makes it possible to spatially modulate the speckle light signal, thereby expanding the measurement range of the depth detection apparatus, and improving the measurement accuracy of depth detection.

As an example rather than a limitation, when the light source 211 has 20 light-emitting units and can emit 20 light spots to form light signals, the light signals are converted into parallel light signals after passing through the emitting lens 212. If the light signal duplication element 213 is a 3x3 DOE and can achieve 3x3 duplication of the light spots, the speckle light signal composed of 180 light spots will be finally projected onto the detection object.

In another optional embodiment, the emitting assembly may not include the light signal duplication element, the laser beam array emitted by the light source passes through the collimator to form the speckle light signal, and a plurality of lenses included in the collimator cause the speckle light signal to generate positive distortion.

Optionally, in one embodiment, the imaging lens 214 (RX LENs) may include one lens or a lens group composed of a plurality of lenses. The plurality of lenses are arranged in sequence along the optical axis to form the lens group, the depth light signal reflected and/or scattered by the detection object 30 is imaged to the photoelectric sensor. Optionally, the imaging lens 214 is made of plastic material. Certainly, the imaging lens may also be an optical lens made of other material. In one embodiment, a plurality of lenses in the imaging lens 214 are configured to generate negative distortion. The negative distortion generated by the imaging lens 214 is configured to be complementary to the positive distortion generated by the emitting assembly 210, and the negative distortion and the positive distortion each are distortion having a distortion amount whose absolute value is greater than or equal to 0.03.

Optionally, in one embodiment, the complementation between the negative distortion and the positive distortion means that the positive distortion and the negative distortion have opposite distortion amounts and that a difference between the absolute values of the distortion amounts does not exceed 0.05.

When a difference between an absolute value of a distortion amount of the negative distortion generated by the imaging lens 214 and an absolute value of a distortion amount of the positive distortion generated by the emitting assembly 210 does not exceed 0.05, it may be considered that the imaging lens 214 can complement the positive distortion generated by the emitting assembly 210. In other words, in one embodiment, the difference between the absolute values of the distortion amounts may be calculated by using the following formula:

$$\frac{|\text{Dis}(-)| - |\text{Dis}(+)|}{|\text{Dis}(-)|} * 100\%$$

wherein Dis(-) denotes the distortion amount of the negative distortion, and Dis(+) denotes the distortion amount of the positive distortion.

A distortion curve of the imaging lens 214 is designed according to the positive distortion generated by the emitting assembly 210, such that the negative distortion generated by the imaging lens 214 can be complementary to the positive distortion generated by the emitting assembly 210. The complementary effect can eliminate the distortion generated by the emitting assembly 210, and can increase the utilization of edge speckles and reduce the power consumption, thereby enhancing relative illuminance of the imaging lens 214, improving depth resolution, and greatly improving imaging quality of the depth detection apparatus. The complementary effect further helps omit steps and components of subsequent image processing in a general depth detection apparatus, which reduces costs of the depth detection apparatus, and improves the efficiency of depth detection.

A distortion curve of the negative distortion generated by the imaging lens 214 satisfies a formula:

$$y = A1 * x + A2 * x^2 + A3 * x^3 + A4 * x^4 + A5 * x^5$$

wherein y denotes a distortion amount, x denotes a normalized value of a field of view angle, and A1 to A5 are parameter coefficients, wherein $0.123 <, A1 \leq 0.147, -0.774 \leq A2 \leq -0.686, 1.708 \leq A3 \leq 1.718, -1.967 \leq A4 \leq -1.961$, and $0.679 \leq A5 \leq 0.683$.

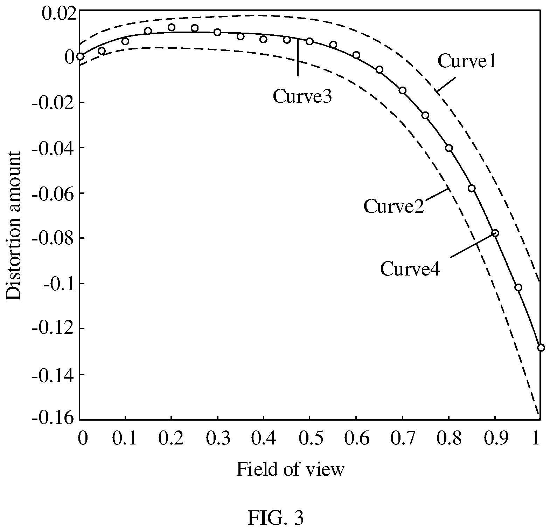

Distortion curves fitted by using the above formula are shown in FIG. 3, where Curve 1 and Curve 2 are boundary curves fitted when the foregoing parameter coefficients take extreme values, Curve 3 is a distortion curve fitted by using the above formula, and a distortion curve corresponding to the distortion generated by the imaging lens 214 is shown as Curve 4.

It should be understood that any imaging lens whose distortion curve falls between the boundary curves, Curve 1 and Curve 2, by adjusting the foregoing parameter coefficients falls within the protection scope of the present application.

Optionally, in a possible implementation, the distortion curve of the negative distortion generated by the imaging lens 214 satisfies that the distortion amount is -0.2 when the field of view is 40 degrees; the distortion amount is -0.1 when the field of view is 30 degrees; and the distortion amount is 0 when the field of view is 0 degrees.

Optionally, in one embodiment, the imaging lens 214 is configured as a distortion-adjustable lens system, and includes a lens group composed of lenses, where the plurality of lenses are configured to generate negative distortion. The plurality of lenses may generate negative distortion having the same or different distortion curves. When the emitting assembly 210 is configured to generate positive distortion 1, a position, on the optical path, of one lens of the imaging lens 214 generating negative distortion is adjusted, such that negative distortion 1 generated by the imaging lens 214 is complementary to the positive distortion 1; and when the emitting assembly 210 is configured to generate positive distortion 2, a position, on the optical path, of one or more lenses of the imaging lens 214 generating negative distortion is adjusted, such that negative distortion 2 generated by the imaging lens 214 is complementary to the positive distortion 2.

In this way, the depth detection apparatus can flexibly configure the imaging lens 214 to generate corresponding negative distortion according to the positive distortion generated by the emitting assembly 210, so that distortion complementation between the imaging lens 214 and the emitting assembly 210 can be achieved within an adjustable range of the lens, which improves the utilization of speckles, reduces the power consumption of the depth detection apparatus, and improves the depth resolution, thereby further omitting steps and components of subsequent image processing in a general depth detection apparatus, expanding application scenarios of the depth detection apparatus where an image captured by the lens is used directly, and improving the flexibility of the depth detection apparatus.

Optionally, in one embodiment, the photoelectric sensor 215 may be an array composed of a plurality of photosensitive elements, and the photosensitive element may be a photodiode (PD), a phototransistor (PT), or any element that can convert a light signal to an electrical signal. The photoelectric sensor 215 may be an array composed of some pixel units, where the pixel unit may be a charge-coupled device (CCD), a complementary metal-oxide semiconductor (CMOS), an avalanche diode (AD), a single photon avalanche diode (SPAD), or the like. In this embodiment, a PD is taken as an example. The depth light signal 40 is received by the imaging lens 214 designed to generate negative distortion and then imaged to the PD, and the PD can directly output a light signal after distortion correction.

Optionally, in one embodiment, a distortion curve of the imaging lens 214 may be configured according to the distortion curve of the emitting assembly 210.

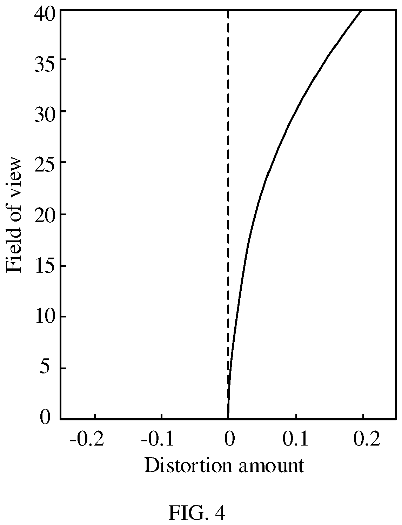

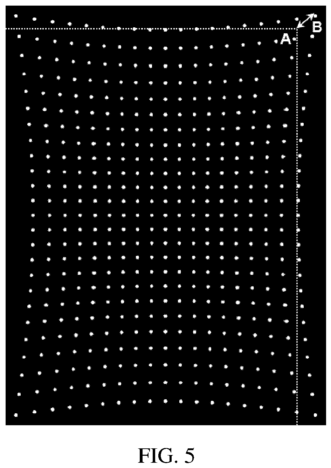

Because of nonlinear physical characteristics of an optical component in the emitting assembly 210 and inevitable tolerances in the assembly process, the emitting assembly 210 may generate positive distortion. For example, the emitting assembly 210 may generate positive distortion having a distortion curve as shown in FIG. 4, where a horizontal axis (X axis) of the distortion curve represents a distortion amount, and a vertical axis (Y axis) represents a field of view. Without special configuration of the imaging lens, speckle distribution of the depth light signal 40 is shown in FIG. 5. Due to the positive distortion of the speckle array, some of the edge speckles that originally can reach the photosensitive element fail to reach the photosensitive element, and the edge speckles cannot be utilized, resulting in a loss of system power consumption.

Optionally, the distortion curve of the imaging lens 214 may be configured according to the distortion curve of the emitting assembly 210. The distortion curve of the emitting assembly 210 may be obtained from measurement data of the emitting assembly 210. For example, the distortion curve of the emitting assembly 210 may be determined according to a speckle pattern generated by the emitting assembly 210. Specifically, a VCSEL light source 211 having an ideal speckle array is disposed in the emitting assembly 210, and emits an ideal speckle light signal (a speckle array without distortion). A speckle array formed after the ideal speckles are affected by positive distortion generated by the emitting assembly 210 is shown in FIG. 5. In a field of view of 40 degrees, a real position of one edge speckle is shown as a point B, and a position of an ideal speckle spot corresponding to the edge speckle spot B is shown as a point A. A deviation value between the point A and the point B is measured, and according to the calculation formula of the distortion amount, a distortion amount of a field of view corresponding to the field of view of 40 degrees can be calculated. Similarly, deviation values between other speckle spots in the speckle array of FIG. 5 and corresponding ideal speckle spots in the ideal speckle light array are measured to establish a mapping relationship between the field of view and the distortion amount, thereby fitting a distortion curve of the emitting assembly 210. After the distortion curve of the emitting assembly 210 is obtained, a complementary distortion curve is configured for the imaging lens 214 according to the distortion curve of the emitting assembly 210. Specifically, Y-axis symmetry may be performed on the calculated distortion curve of the emitting assembly 210 to obtain the distortion curve of the imaging lens 214.

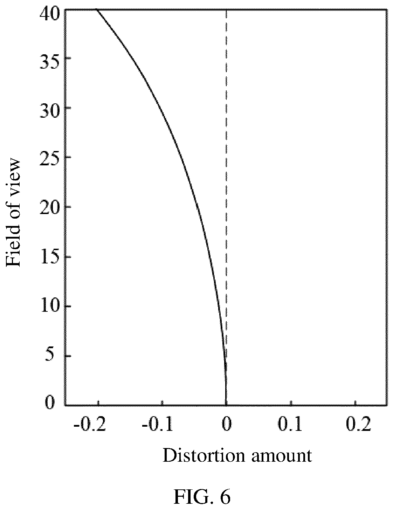

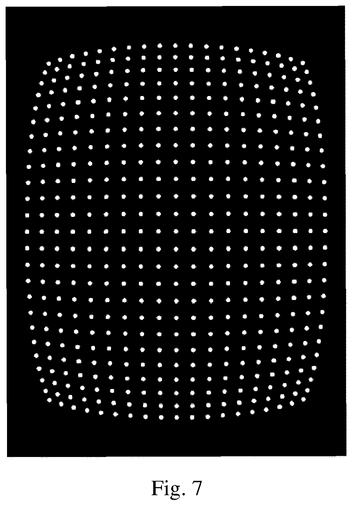

For example, for the positive distortion curve shown in FIG. 4, the imaging lens 214 may be configured to generate negative distortion corresponding to a distortion curve shown in FIG 6. When the ideal speckle light signal passes through the imaging lens 214 configured to generate corresponding negative distortion, the speckle distribution of the depth light signal on the photoelectric sensor 215 is shown in FIG. 7.

Optionally, the distortion curve of the imaging lens 214 may also be obtained according to an imaging pattern on the photoelectric sensor 215. For example, the distortion curve of the imaging lens 214 may be adjusted by means of simulation. Specifically, after a distortion curve a of the emitting assembly 210 is obtained by means of measurement, the emitting assembly 210 is simulated in simulation software to generate the same positive distortion as the distortion curve a. A distortion curve b is obtained by constantly adjusting the field-of-view angle, distortion amount, and mapping relationship of the imaging lens 214 in the simulation software, until the imaging pattern of the photoelectric sensor 215 has no distortion or a difference between absolute values of distortion amounts does not exceed 0.05. At this time, a simulated distortion curve b of the imaging lens 214 is used as a finally configured distortion curve.

In this way, the distortion curve of the imaging lens 214 may be configured to be complementary to the distortion curve of the emitting assembly 210.

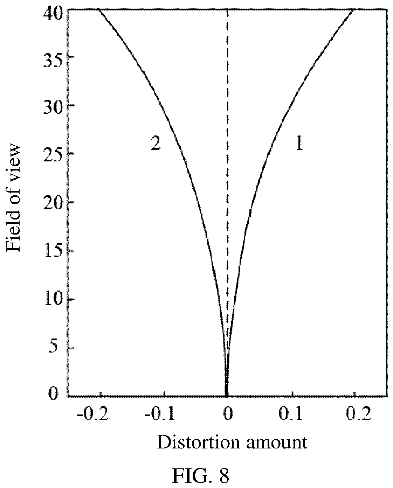

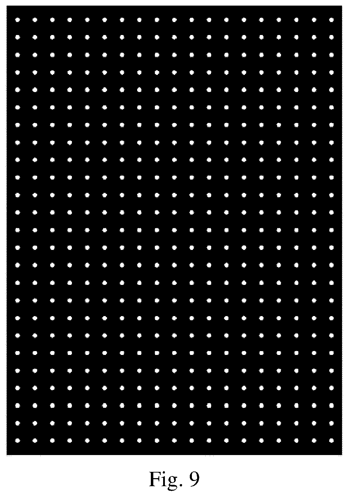

For example, a distortion curve 1 of the emitting assembly 210 in the depth detection apparatus 200 is complementary to a distortion curve 2 of the imaging lens 214, as shown in FIG. 8. The speckle light signal 20 with positive distortion passes through the detection object 30 and forms the depth light signal 40 with positive distortion. After the depth light signal 40 is received by the imaging lens 214 with negative distortion, the original positive distortion of the speckle array is corrected. A speckle array of the depth light signal 40 finally captured on the photoelectric sensor 215 is shown in FIG. 9.

In this embodiment of the present application, by means of the cooperative design of the emitting assembly 210 and the imaging lens 214 in the depth detection apparatus 200, a specific distortion curve of the imaging lens 214 is designed, and a distortion pattern of the imaging lens 214 is configured, such that part of the edge speckles that originally cannot reach the photoelectric sensor 215 due to positive distortion can reach the photoelectric sensor 215 due to the correction by the negative distortion of the imaging lens 214, thereby increasing the utilization of edge speckles in a time-of-flight depth detection system, and reducing the system power consumption. In addition, thanks to the distortion design of the imaging lens 214, the negative distortion generated by the imaging lens 214 allows the speckles, which originally can only reach the edge of the photoelectric sensor 215 due to positive distortion, to reach a position closer to the center of the photoelectric sensor 215 after correction, thereby enhancing relative illuminance of the imaging lens 214, reducing an energy difference between a center pixel and an edge pixel, and improving system depth resolution.

In this embodiment of the present application, the configuration of the distortion curves of the imaging lens and the emitting assembly makes the generated distortion complementary. The complementary effect can further eliminate the positive distortion generated by the emitting assembly, further increase the utilization of edge speckles, and reduce system power consumption, thereby enhancing relative illuminance of the imaging lens, improving depth resolution, and greatly improving imaging quality of the depth detection apparatus. In addition, because the distortion complementation eliminates the positive distortion generated by the emitting assembly, steps and components of subsequent image processing in a general depth detection apparatus can be omitted, which reduces costs of the depth detection apparatus, and improves the efficiency of depth detection.

An embodiment of the present application further provides an electronic device, including the depth detection apparatus 200 and a control unit in the various embodiments of the present application described above.

As an example rather than a limitation, the electronic device in the embodiment of the present application may include a device capable of performing complete or partial functions, such as a smartphone, a smart watch, or smart glasses; or may include a device that only focuses on a certain type of application function and needs to be used together with another device such as a smartphone, for example, the device may be various types of smart bands and smart jewelry for physical sign monitoring. The depth detection apparatus may be configured to measure depth information of a detection object, and the control unit may receive the depth information to operate and control at least one function of the electronic device. For example, distance-based photographing-assisted focusing may be performed according to the measured depth information of a human face, or the electronic device is unlocked according to the depth information, and so on.

Through description of the foregoing implementations, persons skilled in the art may understand that, for convenience and conciseness of description, only the division of the foregoing function modules is used as an example. In practical applications, the foregoing functions may be allocated to and completed by different function modules as required, that is, an internal structure of the apparatus is divided into different function modules to complete all or some of the functions described above. In addition, the displayed or discussed mutual couplings or direct couplings or communication connections may be indirect couplings or communication connections by using some interfaces, apparatuses, or units, and may also be connection in electrical, mechanical, or other forms.

It should be noted that, on the premise of no conflict, the embodiments and/or the technical features thereof described in the present application may be arbitrarily combined with each other, and the technical solutions obtained after combination shall also fall within the protection scope of the present application.

It should further be noted that the terms used in the embodiments of the present application and the appended claims are intended only to describe specific embodiments and are not intended to limit the embodiments of the present application. For example, the singular forms of "a/an", "said" and "the" used in the embodiments of the present application and the appended claims are also intended to include plural forms, unless the context clearly implies otherwise.

It should be understood that the specific examples in the embodiments of the present application are intended only to help persons skilled in the art better understand the embodiments of the present application, rather than limiting the scope of the embodiments of the present application. Persons skilled in the art can make various improvements and modifications on the basis of the foregoing embodiments, all of which shall fall within the protection scope of the present application.

The foregoing descriptions are merely specific implementations of the present application, but the protection scope of the present application is not limited thereto. Any variation or replacement readily figured out by persons skilled in the art within the technical scope disclosed in the present application shall fall within the protection scope of the present application. Therefore, the protection scope of the present application shall be subject to the protection scope of the claims.

## Claims

1. A depth detection apparatus (200), comprising:

    an emitting assembly (210) for emitting a speckle light signal (20) to a detection object (30), wherein the emitting assembly (210) is configured to cause the speckle light signal (20) to generate positive distortion;
    an imaging lens (214) for imaging, to a photoelectric sensor (215), a depth light signal (40) returned after the speckle light signal (20) strikes the detection object (30), wherein the imaging lens (214) is configured to cause the imaging of the depth light signal (40) to generate negative distortion; and
    the photoelectric sensor (215) for converting the depth light signal (40) into an electrical signal,

**characterized in that**

a difference between an absolute value of a distortion amount of the negative distortion and an absolute value of a distortion amount of the positive distortion does not exceed 0.05, and the negative distortion and the positive distortion each are distortion having a distortion amount whose absolute value is greater than or equal to 0.03; wherein the distortion amount is calculated by the formula:

$$\text{Dis} = \frac{(H_{real} - H_{ideal})}{H_{ideal}} * 100\%$$

wherein Dis denotes a distortion amount, *Hreal* denotes a real image height, *Hideal* denotes an ideal image height;
wherein a distortion curve of the negative distortion satisfies a formula:

$$y = A1 * x + A2 * x^2 + A3 * x^3 + A4 * x^4 + A5 * x^5$$

wherein y denotes a distortion amount, x denotes a normalized value of a field of view angle, and A1 to A5 are parameter coefficients, wherein $0.123 \leq A1 \leq 0.147$, $- 0.702 \leq A2 \leq - 0.686$, $1.708 \leq A3 \leq 1.718$, $- 1.967 \leq A4 \leq - 1.961$, and $0.679 \leq A5 \leq 0.683$, $0 \leq x \leq 1$.

2. The apparatus (200) according to claim 1, wherein the emitting assembly (210) comprises a plurality of lenses, and the plurality of lenses are configured to cause the speckle light signal (20) to generate the positive distortion.

3. The apparatus (200) according to claim 1, wherein the emitting assembly (210) comprises a plurality of lenses and one light signal duplication element (213), and the plurality of lenses and the light signal duplication element (213) are configured to cause the speckle light signal (20) to generate the positive distortion.

4. The apparatus (200) according to claim 1, wherein the imaging lens (214) comprises a plurality of lenses arranged in sequence along an optical axis, and the plurality of lenses are configured to cause the imaging of the depth light signal to generate the negative distortion.

5. The apparatus (200) according to claim 1, wherein a distortion curve of the negative distortion satisfies that the distortion amount is -0.2 when the field of view is 40 degrees; the distortion amount is -0.1 when the field of view is 30 degrees; and the distortion amount is 0 when the field of view is 0 degrees.

6. The apparatus (200) according to claim 1, wherein the emitting assembly (210) comprises:

   a light source (211) for emitting a plurality of light signals; and
   an emitting lens (212) for converting the light signals into parallel light signals.

7. The apparatus (200) according to claim 6, wherein the emitting assembly (210) further comprises a light signal duplication element (213), and the light signal duplication element (213) is configured to duplicate the parallel light signals to obtain the speckle light signal (20).

8. The apparatus (200) according to claim 6, wherein the light source (211) is a vertical-cavity surface-emitting laser.

9. The apparatus (200) according to claim 6, wherein the emitting lens (212) is a collimator.

10. The apparatus (200) according to claim 9, wherein the collimator comprises a plurality of lenses arranged in sequence along a direction of an optical axis.

11. The apparatus (200) according to claim 1, wherein the imaging lens (214) is made of plastic material.

12. An electronic device, comprising:

    the depth detection apparatus (200) according to any one of claims 1 to 11, wherein the depth detection apparatus (200) is configured to measure depth information of a detection object; and
a control unit configured to operate and control at least one function of the electronic device according to the depth information.

**Patentansprüche**

1. Tiefenerkennungseinrichtung (200), umfassend:

   eine Emittieranordnung (210) zum Emittieren eines Speckle ("Sprenkel") -Lichtsignals (20) an ein Detektionsobjekt (30), wobei die Emittieranordnung (210) dafür ausgelegt ist zu bewirken, dass das Speckle-Lichtsignal (20) eine positive Verzeichnung erzeugt;
   eine Bildgebungslinse (214) zum Abbilden, auf einen photoelektrischen Sensor (215), eines Tiefenlichtsignals (40), das zurückgegeben wird, nachdem das Speckle-Lichtsignal (20) auf das Detektionsobjekt (30) aufgetroffen ist, wobei die Bildgebungslinse (214) dafür ausgelegt ist zu bewirken, dass das Abbilden des Tiefenlichtsignals (40) eine negative Verzeichnung erzeugt; und
   den photoelektrischen Sensor (215) zum Umwandeln des Tiefenlichtsignals (40) in ein elektrisches Signal,
   **dadurch gekennzeichnet, dass**
   eine Differenz zwischen einem absoluten Wert eines Verzeichnungsbetrags der negativen Verzeichnung und einem absoluten Wert eines Verzeichnungsbetrags der positiven Verzeichnung 0,05 nicht überschreitet und die negative Verzeichnung und die positive Verzeichnung jeweils eine Verzeichnung mit einem Verzeichnungsbetrag sind, dessen absoluter Wert größer oder gleich 0,03 ist;
   wobei der Verzeichnungsbetrag nach der Formel berechnet wird:

$$\text{Dis} = \frac{(H_{real} - H_{ideal})}{H_{ideal}} * 100\%$$

   wobei Dis für einen Verzeichnungsbetrag steht, *Hreal* für eine reale Bildhöhe steht, *Hideal* für eine ideale Bildhöhe steht;
   wobei eine Verzeichnungskurve der negativen Verzeichnung eine Formel erfüllt:

$$y = A1 * x + A2 * x^2 + A3 * x^3 + A4 * x^4 + A5 * x^5$$

   wobei y für einen Verzeichnungsbetrag steht, x für einen normalisierten Wert eines Sichtfeldwinkels steht und A1 bis A5 Parameterkoeffizienten sind, wobei $0{,}123 \leq A1 \leq 0{,}147$, $-0{,}702 \leq A2 \leq -0{,}686$, $1{,}708 \leq A3 \leq 1{,}718$, $-1{,}967 \leq A4 \leq -1{,}961$ und $0{,}679 \leq A5 \leq 0{,}683$, $0 \leq x \leq 1$.

2. Einrichtung (200) gemäß Anspruch 1, wobei die Emittieranordnung (210) mehrere Linsen umfasst und die mehreren Linsen dafür ausgelegt sind zu bewirken, dass das Speckle-Lichtsignal (20) die positive Verzeichnung erzeugt.

3. Einrichtung (200) gemäß Anspruch 1, wobei die Emittieranordnung (210) mehrere Linsen und ein Lichtsignalvervielfältigungselement (213) umfasst und die mehreren Linsen und das Lichtsignalvervielfältigungselement (213) dafür ausgelegt sind zu bewirken, dass das Speckle-Lichtsignal (20) die positive Verzeichnung erzeugt.

4. Einrichtung (200) gemäß Anspruch 1, wobei die Bildgebungslinse (214) mehrere Linsen umfasst, die hintereinander entlang einer optischen Achse angeordnet sind, und die mehreren Linsen dafür ausgelegt sind zu bewirken, dass das Abbilden des Tiefenlichtsignals die negative Verzeichnung erzeugt.

5. Einrichtung (200) gemäß Anspruch 1, wobei eine Verzeichnungskurve der negativen Verzeichnung erfüllt, dass der Verzeichnungsbetrag -0,2 ist, wenn das Sichtfeld 40 Grad beträgt; der Verzeichnungsbetrag -0,1 ist, wenn das Sichtfeld 30 Grad beträgt; und der Verzeichnungsbetrag 0 ist, wenn das Sichtfeld 0 Grad beträgt.

6. Einrichtung (200) gemäß Anspruch 1, wobei die Emittieranordnung (210) umfasst:

   eine Lichtquelle (211) zum Emittieren mehrerer Lichtsignale; und
   eine Emittierlinse (212) zum Umwandeln der Lichtsignale in parallele Lichtsignale.

**7.** Einrichtung (200) gemäß Anspruch 6, wobei die Emittieranordnung (210) ferner ein Lichtsignalvervielfältigungselement (213) umfasst und das Lichtsignalvervielfältigungselement (213) dafür ausgelegt ist, die parallelen Lichtsignale zu vervielfältigen, um das Speckle-Lichtsignal (20) zu erhalten.

**8.** Einrichtung (200) gemäß Anspruch 6, wobei die Lichtquelle (211) ein oberflächenemittierender Laser mit vertikaler Kavität ist.

**9.** Einrichtung (200) gemäß Anspruch 6, wobei die Emittierlinse (212) ein Kollimator ist.

**10.** Einrichtung (200) gemäß Anspruch 9, wobei der Kollimator mehrere Linsen umfasst, die entlang einer Richtung einer optischen Achse hintereinander angeordnet sind.

**11.** Einrichtung (200) gemäß Anspruch 1, wobei die Bildgebungslinse (214) aus Kunststoffmaterial gefertigt ist.

**12.** Elektronische Vorrichtung, umfassend:

die Tiefenerkennungseinrichtung (200) gemäß einem der Ansprüche 1 bis 11, wobei die Tiefenerkennungseinrichtung (200) dafür ausgelegt ist, Tiefeninformationen eines Detektionsobjekts zu messen; und
eine Steuereinheit, die dafür ausgelegt ist, wenigstens eine Funktion der elektronischen Vorrichtung gemäß der Tiefeninformation zu betreiben und zu steuern.

**Revendications**

**1.** Appareil de détection de profondeur (200), comprenant :

un ensemble d'émission (210) pour l'émission d'un signal lumineux de speckle (20) vers un objet de détection (30), l'ensemble d'émission (210) étant configuré pour amener le signal lumineux de speckle (20) à générer une distorsion positive ;
une lentille d'imagerie (214) pour imager, vers un capteur photoélectrique (215), un signal lumineux de profondeur (40) renvoyé après que le signal lumineux de speckle (20) a frappé l'objet de détection (30),
la lentille d'imagerie (214) étant configurée pour amener l'imagerie du signal lumineux de profondeur (40) à générer une distorsion négative ; et
le capteur photoélectrique (215) pour convertir le signal lumineux de profondeur (40) en un signal électrique,
**caractérisé en ce que**
une différence entre une valeur absolue d'une quantité de distorsion de la distorsion négative et une valeur absolue d'une quantité de distorsion de la distorsion positive ne dépasse pas 0,05, et la distorsion négative et la distorsion positive sont toutes deux des distorsions ayant une quantité de distorsion dont la valeur absolue est supérieure ou égale à 0,03 ;
la quantité de distorsion étant calculée selon la formule :

$$Dis = \frac{(H_{réelle} - H_{idéale})}{H_{idéale}} * 100\,\%$$

Dis désignant une quantité de distorsion, $H_{réelle}$ désignant une hauteur d'image réelle, $H_{idéale}$ désignant une hauteur d'image idéale ;
une courbe de distorsion de la distorsion négative satisfaisant une formule :

$$y = A1*x + A2*x^2 + A3*x^3 + A4*x^4 + A5*x^5$$

y désignant une quantité de distorsion, x désignant une valeur normalisée d'un angle de champ de vision, et A1 à A5 étant des coefficients de paramètre, avec $0,123 \leq A1 \leq 0,147$, $-0,702 \leq A2 \leq -0,686$, $1,708 \leq A3 \leq 1,718$, $-1,967 \leq A4 \leq -1,961$, and $0,679 \leq A5 \leq 0,683$, $0 \leq x \leq 1$.

**2.** Appareil (200) selon la revendication 1, l'ensemble d'émission (210) comprenant une pluralité de lentilles, et la pluralité de lentilles étant configurées pour amener le signal lumineux de speckle (20) à générer la distorsion positive.

3.  Appareil (200) selon la revendication 1, l'ensemble d'émission (210) comprenant une pluralité de lentilles et un élément de duplication de signal lumineux (213), et la pluralité de lentilles et l'élément de duplication de signal lumineux (213) étant configurés pour amener le signal lumineux de speckle (20) à générer la distorsion positive.

4.  Appareil (200) selon la revendication 1, la lentille d'imagerie (214) comprenant une pluralité de lentilles agencées en séquence le long d'un axe optique, et la pluralité de lentilles étant configurées pour amener l'imagerie du signal lumineux de profondeur à générer la distorsion négative.

5.  Appareil (200) selon la revendication 1, une courbe de distorsion de la distorsion négative satisfaisant le fait que la quantité de distorsion est -0,2 lorsque le champ de vision est de 40 degrés ; la quantité de distorsion étant -0,1 lorsque le champ de vision est de 30 degrés ; et la quantité de distorsion étant 0 lorsque le champ de vision est de 0 degrés.

6.  Appareil (200) selon la revendication 1, l'ensemble d'émission (210) comprenant :

    une source lumineuse (211) pour l'émission d'une pluralité de signaux lumineux ; et
    une lentille d'émission (212) pour convertir les signaux lumineux en signaux lumineux parallèles.

7.  Appareil (200) selon la revendication 6, l'ensemble d'émission (210) comprenant en outre un élément de duplication de signal lumineux (213), et l'élément de duplication de signal lumineux (213) étant configuré pour dupliquer les signaux lumineux parallèles afin d'obtenir le signal lumineux de speckle (20).

8.  Appareil (200) selon la revendication 6, la source lumineuse (211) étant un laser à émission de surface à cavité verticale.

9.  Appareil (200) selon la revendication 6, la lentille d'émission (212) étant un collimateur.

10. Appareil (200) selon la revendication 9, le collimateur comprenant une pluralité de lentilles agencées en séquence le long d'une direction d'un axe optique.

11. Appareil (200) selon la revendication 1, la lentille d'imagerie (214) étant en matière plastique.

12. Dispositif électronique comprenant :

    l'appareil de détection de profondeur (200) selon l'une quelconque des revendications 1 à 11, l'appareil de détection de profondeur (200) étant configuré pour mesurer des informations de profondeur d'un objet de détection ; et
    une unité de commande configurée pour faire fonctionner et commander au moins une fonction du dispositif électronique en fonction des informations de profondeur.

FIG. 1

FIG. 2

FIG. 3

FIG. 4

FIG. 5

FIG. 6

Fig. 7

FIG. 8

Fig. 9

**EP 4 047 386 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110596720 A